# EUROPÄISCHE PATENTSCHRIFT

(11) **EP 2 021 274 B1**
(45) Veröffentlichungstag und Bekanntmachung des Hinweises auf die Patenterteilung: **16.08.2017**
(21) Anmeldenummer: 07725073.6
(22) Anmeldetag: 10.05.2007
(51) Int. Cl.: C01B 3/38

(54) **VERFAHREN UND ANLAGE ZUR HERSTELLUNG VON SYNTHESEGAS**
METHOD AND INSTALLATION FOR THE PRODUCTION OF SYNTHESIS GAS
PROCÉDÉ ET INSTALLATION DE PRODUCTION DE GAZ DE SYNTHÈSE

(30) Priorität: 18.05.2006 DE 102006023248
(43) Veröffentlichungstag der Anmeldung: 11.02.2009
(73) Patentinhaber: Air Liquide Global E&C Solutions Germany GmbH, 60439 Frankfurt am Main (DE)
(72) Erfinder: BORMANN, Andreas, 60385 Frankfurt am Main (DE); MÜLLER, Dierk, 61184 Karben (DE)
(74) Vertreter: Keil & Schaafhausen Patent- und Rechtsanwälte PartGmbB
(86) Internationale Anmeldenummer: PCT/EP2007/004152
(87) Internationale Veröffentlichungsnummer: WO 2007/134727

(56) Entgegenhaltungen:
- EP-A- 1 586 535
- EP-A2- 0 989 094
- WO-A-02/26677
- WO-A-02/36532
- WO-A-2004/041716
- WO-A1-2004/096952
- GOEHNA H: "Concepts for modern methanol plants", 1997 WORLD METHANOL CONFERENCE : THE 15TH ANNUAL WORLD METHANOL CONFERENCE ; DECEMBER 8 - 10, 1997, HYATT REGENCY WESTSHORE, TAMPA, FLORIDA, USA, US, 1 January 1997 (1997-01-01), pages 139-142, XP009137676,

## Beschreibung

### Technisches Gebiet

Die vorliegende Erfindung betrifft ein Verfahren und eine Anlage zur Herstellung von Synthesegas aus einem Kohlenwasserstoffe enthaltenden Ausgangsmaterial, insbesondere Erdgas, wobei ein Zufuhrstrom des Ausgangsmaterials in einen ersten Teilstrom und einen zweiten Teilstrom aufgeteilt wird, wobei der erste Teilstrom einem Dampfreformer zugeführt wird, in dem er zusammen mit Wasserdampf katalytisch zu einem Wasserstoff und Kohlenstoffoxide enthaltenden Gasstrom umgewandelt wird, wobei der erste Teilstrom nach der Dampfreformierung wieder mit dem zweiten Teilstrom zusammengeführt wird, und wobei der zusammengeführte Gasstrom einem autothermen Reformer zugeführt wird, in dem er zusammen mit sauerstoffreichem Gas autotherm zu einem Synthesegas reformiert wird.

Als Ausgangsprodukt für die Gewinnung von Synthesegas, wie es anschließend für die Herstellung von chemischen Produkten, bspw. Methanol oder Ammoniak, verwendet wird, dient insbesondere Erdgas. Erdgas ist im Wesentlichen eine Mischung von gasförmigen Kohlenwasserstoffen, deren Zusammensetzung je nach Herkunftsort variiert. Die Hauptkomponente von Erdgas ist Methan. Hinzu kommen höhere Kohlenwasserstoffe mit zwei oder mehr Kohlenwasserstoffatomen sowie Nebenprodukte, wie Schwefel.

Die Umwandlung des Erdgases in Synthesegas erfolgt seit langem in Dampfreformern durch katalytische Umwandlung der Kohlenwasserstoffe mit Wasserdampf auf der Basis folgender endothermer Reaktionen:

CₙH₂ₙ₊₂ + 2ₙH₂O ⇆ nCO₂ + n4H₂

und

CₙH₂ₙ₊₂ + nH₂O ⇆ nCO + n3H₂

Zur Reduzierung des Schadstoffausstoßes und zur Energieeinsparung werden zusätzlich autotherme katalytische Reformer eingesetzt, die dem Dampfreformer nachgeschaltet werden. Derartige kombinierte Verfahren werden als *"Combined Reforming"* bezeichnet. Bei der autothermen Reformierung wird die erforderliche Energie durch Verbrennung mit Sauerstoff gemäß folgender Reaktion

CH₄ + O₂ ⇆ CO + H₂ + H₂O

zugeführt. Aus den Kohlenwasserstoffen entstehen im Wesentlichen Kohlenmonoxid und Wasserstoff.

Eine Weiterbildung des Combined Reforming ist in der EP 0 233 076 B1 beschrieben. Hierbei wird das zugeführte Erdgas in zwei Ströme aufgeteilt. Ein Teilstrom wird durch den Dampfreformer hindurchgeführt, in dem das Erdgas zusammen mit Wasserdampf katalytisch zu einem Wasserstoff und Kohlenstoffoxide enthaltenden Gasstrom umgewandelt wird, und dann dem nachgeschalteten autothermen Reformer zugeführt. Der zweite Teilstrom wird an dem Dampfreformer vorbei direkt dem autothermen Reformer zugeführt. In dem autothermen Reformer wird der zugeführte Gasstrom zusammen mit Sauerstoff zu Synthesegas reformiert, das anschließend zur Methanolsynthese verwendet wird. Enthält der dem Dampfreformer zugeführte Gasstrom höhere Kohlenwasserstoffe, so muss zur Erreichung eines für die Reformierungsreaktion akzeptablen Dampf-/Kohlenstoffverhältnisses zusätzlicher Wasserdampf zugeführt werden. Dies vergrößert die Anlage und erhöht die Ausrüstungs- und Betriebskosten.

Es wurde daher bereits vorgeschlagen, vor dem Dampfreformer einen Vorreformer vorzusehen, in dem die höheren Kohlenwasserstoffe in C₁-Komponenten umgewandelt werden (vgl. Hermann Göhna: "Concepts for modern methanol plants", präsentiert und veröffentlicht auf der 1997 World Methanol Conference in Tampa, Florida, U.S.A., 8. bis 10. Dezember 1997, Seiten 139 bis 142). Durch die Umwandlung der höheren Kohlenwasserstoffe in Methan ist es möglich, im anschließenden Dampfreformer ein niedrigeres Dampf-/ Kohlenstoffverhältnis vorzusehen. Dies führt zu geringeren Durchsatzvolumina und damit reduzierten Investitionskosten. Andererseits kann durch die höheren Temperaturen im Dampfreformer ein höherer Umsatz des Einsatzgases erreicht werden. Der zweite Teilstrom wird auch hier direkt zum autothermen Reformer geleitet.

Die WO 2004/096952 beschreibt ein Verfahren zur Herstellung von Synthesegas aus Kohlenwasserstoffen, wobei ein Ausgangsstrom in zwei Teilströme aufgesplittet wird. Der erste Teilstrom wird zuerst einem Vorreformer zugeführt und dann in einen Dampfreformierer geleitet. Das dort dampfreformierte Gas wird mit dem zweiten Teilstrom vermischt und die so vermischten Ströme werden einem autothermen Reformierer zugeführt. Für einen wirtschaftlichen Betrieb des autothermen Reformers ist es erforderlich, das Einsatzgas möglichst hoch vorzuheizen. Hierdurch kann der Bedarf an Sauerstoff, der für die autotherme Spaltreaktion erforderlich und sehr teuer ist, reduziert werden. Die Vorheiztemperatur des Einsatzgases ist jedoch durch darin enthaltene höhere Kohlenwasserstoffe begrenzt, die bei höheren Temperaturen zu Rußbildung durch Crack-Reaktionen führen. Dies kann insbesondere bei Zufuhrgas, in dem der Anteil schwerer Komponenten relativ hoch ist, zu Problemen führen.

### Beschreibung der Erfindung

Aufgabe der Erfindung ist, auch bei der Verarbeitung von Erdgas mit einem hohen Anteil höherer Kohlenwasserstoffe die Wirtschaftlichkeit bei der Synthesegasherstellung zu verbessern.

Diese Aufgabe wird bei einem Verfahren und einer Anlage zur Herstellung von Synthesegas im Wesentlichen durch die Merkmale der Ansprüche 1 bzw. 9 gelöst.

Indem erfindungsgemäß das gesamte dem Dampfreformer und dem autothermen Reformer zugeführte Ausgangsmaterial zunächst durch einen Vorreformer geführt wird, kann der Anteil höherer Kohlenwasserstoffe, d.h. Kohlenwasserstoffe mit zwei oder mehr Kohlenwasserstoffatomen, weitgehend reduziert oder gar ganz eliminiert werden.

Gemäß einer bevorzugten Ausgestaltung der Erfindung erfolgt die Vorreformierung im Hauptstrom des Ausgangsmaterials vor der Aufteilung in den ersten und zweiten Teilstrom. Der Vorreformer muss hierbei gegenüber dem bisher im Teilstrom zum Dampfreformer vorgesehenen Vorreformer lediglich in Anpassung an die nun zusätzlich zu bewältigende Menge des zweiten Teilstroms vergrößert werden. Dadurch lassen sich die zusätzlich erforderlichen Investitionskosten gering halten.

Bei einer anderen Ausgestaltung der Erfindung werden der erste und der zweite Teilstrom des Ausgangsmaterials getrennt einer Vorreformierung unterworfen. Diese Ausgestaltung ist insbesondere für die Nachrüstung bestehender Anlagen zweckmäßig, bei denen vor dem Dampfreformer bereits ein Vorreformer vorgesehen ist.

In dem Vorreformer wird das Ausgangsmaterial erfindungsgemäß einer adiabaten Dampfreformierungsreaktion unterworfen, so dass höhere Kohlenwasserstoffe zuverlässig in C₁-Komponenten umgewandelt werden. Unabhängig von der Zusammensetzung des Erdgases wird den Dampf- und autothermen Reformern ein im Wesentlichen einheitliches Material zugeführt.

Die Umwandlungsreaktion im Vorreformer erfolgt besonders effektiv, wenn das Ausgangsmaterial dem Vorreformer mit einer Temperatur von 400 bis 500°C, vorzugsweise 450 bis 500°C und insbesondere etwa 480°C zugeführt wird.

Der in dem zweiten Teilstrom abgezweigte Anteil des Ausgangsmaterials, der an der Dampfreformierung vorbei direkt zum autothermen Reformer geführt wird, wird in Anpassung an die Qualität des zu verarbeitenden Ausgangsmaterials und insbesondere die Folgeprozesse festgelegt. Erfindungsgemäß kann ein Teilstrom von 20 bis 80% des Ausgangsmaterials abgezweigt werden. Wird das gewonnene Synthesegas einer Methanolanlage zugeführt, die in der Regel ein H₂/CO-Verhältnis von 2:1 voraussetzt, wird vorzugsweise ein Anteil von 20 bis 30%, insbesondere etwa 25%, an der Dampfreformierung vorbeigeführt.

Dem autothermen Reformer wird der Gasstrom erfindungsgemäß mit einer Temperatur von 650 bis 850°C, vorzugsweise 700 bis 800°C und insbesondere etwa 760°C zugeführt. Durch die hohe Temperatur kann die Sauerstoffzufuhr zum autothermen Reformer gering gehalten werden. Dies verringert die Kosten für die Luftzerlegungsanlage. Desweiteren ist in der direkt zum autothermen Reformer führenden Bypassleitung ein Wärmetauscher vorgesehen, um auch den am Dampfreformer vorbeigeführten Gasstrom auf die gewünschte Eingangstemperatur des autothermen Reformers aufzuheizen. Dies ist möglich, da durch die Vorreformierung der Anteil höherer Kohlenwasserstoffe reduziert und daher eine Rußbildung durch Cracken ausgeschlossen ist.

Das erfindungsgemäße Verfahren ermöglicht die Behandlung von Ausgangsmaterial mit einem hohen Anteil von höheren Kohlenwasserstoffen, insbesondere mit mehr als 12 Vol.-% höherer Kohlenwasserstoffe. Die Anlage lässt sich selbstverständlich auch bei geringeren Anteilen an höheren Kohlenwasserstoffen einsetzen, so dass flexibel auf wechselnde Erdgasqualitäten reagiert werden kann.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

### Kurze Beschreibung der Zeichnungen

- Fig. 1: zeigt schematisch ein Fließdiagramm für die Herstellung von Synthesegas gemäß einer ersten Ausführungsform der Erfindung und
- Fig. 2: zeigt schematisch ein Fließdiagramm für die Herstellung von Synthesegas gemäß einer zweiten Ausführungsform der Erfindung.

### Detaillierte Beschreibung der bevorzugten Ausführungsformen

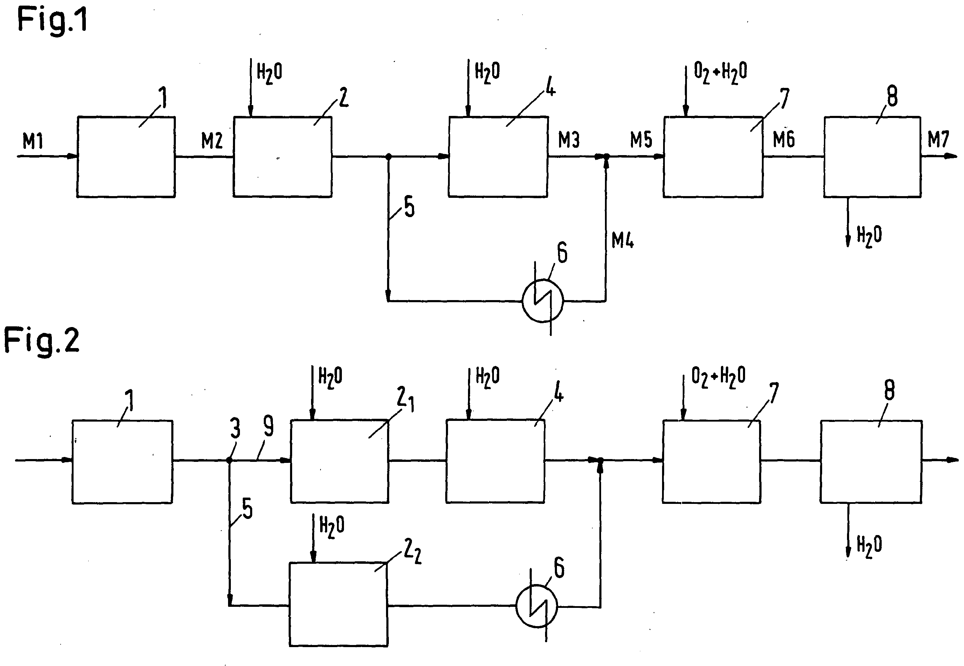

Bei dem in Fig. 1 schematisch dargestellten Fließbild eines erfindungsgemäßen Verfahrens zur Herstellung von Synthesegas wird das Ausgangsmaterial, insbesondere Erdgas, zunächst in einer Entschwefelungsanlage 1 von störenden Nebenprodukten, insbesondere Schwefel, befreit. Anschließend wird das Erdgas, welches bspw. einen Anteil von > 12 Vol.-% an höheren Kohlenwasserstoffen, d.h. Kohlenwasserstoffen mit zwei oder mehr Kohlenwasserstoffatomen, aufweist, mit Wasser oder Wasserdampf gemischt und einem Vorreformer 2 zugeführt. Hierbei handelt es sich bspw. um einen adiabatisch arbeitenden Dampfreformer mit einem Katalysator auf Nickel- oder Kupferbasis, in dem die Kohlenwasserstoffe bei niedriger Temperatur von 450 bis 500°C, insbesondere etwa 480°C mittels der Dampfreformierungsreaktion in C₁-Komponenten umgewandelt werden. Hierbei wird die Temperatur so gewählt, dass das Reaktionsgleichgewicht stark auf der Seite des Methans liegt. Höhere Kohlenwasserstoffe werden in CO und H₂ gespalten und reagieren dann überwiegend weiter zu Methan. Man erhält ein methanreiches, H₂ und CO₂ enthaltendes Gas. In dem Vorreformer sinkt die Temperatur des Gasstroms erfahrungsgemäß je nach Einsatzgas um etwa 10 - 50°C.

Hinter dem Vorreformer 2 wird der Zufuhrstrom an einer Abzweigstelle 3 in einen ersten Teilstrom, der einem Dampfreformer 4 zugeführt wird, und einen zweiten Teilstrom, der über eine Bypassleitung 5 an dem Dampfreformer 4 vorbeigeführt wird, aufgeteilt.

Dem Dampfreformer 4, bspw. einem Röhrenreformer, wird neben dem Gasstrom Wasserdampf zugeführt. Der Gasstrom und der Wasserdampf werden in einer endothermen Reaktion durch Kontakt mit einem Katalysator in eine Gasmischung mit Wasserstoff, Kohlenstoffoxiden und Methan umgewandelt. Die für die Dampfreformierung erforderliche Wärme wird bspw. durch nicht dargestellte Brenner geliefert. Am Ausgang des Dampfreformers 4 beträgt die Temperatur des Gasstroms 650 bis 850°C, insbesondere etwa 760°C.

In der Bypassleitung 5 ist ein Wärmetauscher 6 vorgesehen, mit dem die Temperatur des an dem Dampfreformer 4 vorbeigeleiteten Teilstroms auf 600 bis 700°C, insbesondere etwa 650°C, erhöht wird bevor er wieder mit dem Ausgangsstrom des Dampfreformers 4 zusammengeführt wird. Der kombinierte Gasstrom wird mit einer Temperatur von 650 bis 850°C, insbesondere etwa 730C, einem autothermen Reformer 7 zugeführt, in dem der Gasstrom zusammen mit sauerstoffreichem Gas, insbesondere Sauerstoff aus einer Luftzerlegungsanlage oder dgl., in Gegenwart eines Spaltkatalysators autotherm zu einem Synthesegas reformiert wird. Das aus dem autothermen Reformer 7 mit einer Temperatur von 900 bis 1050°C, insbesondere etwa 975°C, austretende Synthesegas wird anschließend einem Abhitzekessel 8 zugeführt und z. B. zur Methanol- oder Ammoniakgewinnung verwendet.

Der Anteil des über die Bypassleitung 5 an dem Dampfreformer 4 vorbeigeführten Gasstroms hängt von dem gewünschten H₂/CO-Verhältnis nach dem autothermen Reformer ab. Für Methanol-Anlagen liegt das H₂/CO-Verhältnis bei etwa 2:1. Hierfür hat sich ein über die Bypassleitung 5 abgezweigter Anteil von 20 bis 30%, insbesondere etwa 25%, des gesamten Erdgaszustromes als zweckmäßig erwiesen. Bei anderen Anwendungen ist aber auch ein Abzweigen von bis zu 80% möglich.

Die in Fig. 2 gezeigte alternative Verfahrensführung unterscheidet sich lediglich hinsichtlich der Anordnung des Vorreformers von der ersten Ausführungsform. Im Gegensatz zu dem bei der ersten Ausführungsform im Hauptstrom vor der Abzweigstelle 3 vorgesehenen Vorreformer 2 sind bei der zweiten Ausführungsform zwei separate Vorreformer 2₁ und 2₂ in dem zum Dampfreformer 4 führenden Leitungsabschnitt 9 bzw. in der Bypassleitung 5 vorgesehen. Die übrige Funktions- und Wirkungsweise dieser Anlage entspricht derjenigen der ersten Ausführungsform, so dass auf die obigen Ausführungen Bezug genommen werden kann. Dementsprechend sind auch gleiche Komponenten der Anlage mit gleichen Bezugszeichen bezeichnet. Die Anordnung eines zweiten Vorreformers 2₂ in der Bypassleitung 5 eignet sich insbesondere bei der Nachrüstung von Altanlagen, die bereits über einen Vorreformer 2₁ im Leitungsabschnitt 9 vor dem Dampfreformer verfügen. Auch in diesen Anlagen kann durch die erfindungsgemäße Nachrüstung Erdgas mit einem hohen Anteil von höheren Kohlenwasserstoffen verarbeitet werden.

Die Erfindung ermöglicht die Verarbeitung von schwerem Erdgas mit einem hohen Anteil von bspw. > 12 Vol.-% an Kohlenwasserstoffen mit mehr als zwei Kohlenstoffatomen. Da die höheren Kohlenwasserstoffe durch den Vorreformer im gesamten Gasstrom eliminiert werden, kann die Vorlauftemperatur des autothermen Reformers maximiert werden. Dies ermöglicht eine Reduzierung der Sauerstoffzufuhr im autothermen Reformer, was einerseits zu Kosteneinsparungen führt und außerdem den CO₂-Anteil im Synthesegas reduziert. Letzteres ist insbesondere bei Methanol-Anlagen, die einen möglichst kleinen CO₂-Anteil im Synthesegas erfordern, von Vorteil.

Das erfindungsgemäße System lässt sich sehr flexibel für unterschiedliche Gasqualitäten einsetzten, da unabhängig davon, welches Erdgas verarbeitet wird, die Zusammensetzung des Gasstroms nach dem Vorreformer weitgehend gleich ist. Gerade für Anlagen, die mit unterschiedlichen Erdgassorten betrieben werden, erscheint das erfindungsgemäße Verfahren zweckmäßig.

### Beispiel

In der nachfolgenden Tabelle sind die Prozesswerte und Bilanzströme bei einer erfindungsgemäßen Anlage gemäß der ersten Ausführungsform beispielhaft angegeben, wobei die Messstellen in Fig. 1 mit M1 - M7 bezeichnet sind (M2 liegt de facto nach der Dampfzuführung und anschließenden Aufheizung vor Eintritt in den Vorreformer)

| Messpunkt | | M1 | M2 | M3 | M4 | M5 | M6 | M7 |
|---|---|---|---|---|---|---|---|---|
| Temperatur | °C | 30 | 480 | 750 | 650 | 702 | 1000 | 40 |
| Druck | bar | 61,0 | 43,8 | 36,3 | 37,1 | 36,3 | 35,1 | 31,2 |
| Molstrom | kmol/h | 6000 | 13322 | 12500 | 7305 | 19806 | 32153 | 22703 |
| Massenstrom | kg/h | 114772 | 246688 | 176923 | 125194 | 302118 | 434890 | 264607 |
| Molanteil | | | | | | | | |
| CO | mol-% | 0,0% | 0,0% | 5,0% | 0,1% | 3,2% | 16,0% | 22,6% |
| CO₂ | mol-% | 0,0% | 0,0% | 6,5% | 3,6% | 5,4% | 6,0% | 8,5% |
| H₂O | mol-% | 0,0% | 55,0% | 35,2% | 44,2% | 38,5% | 29,6% | 0,3% |
| H₂ | mol-% | 0,0% | 0,0% | 35,6% | 5,7% | 24,6% | 47,7% | 67,5% |
| CH₄ | mol-% | 88,0% | 39,6% | 17,8% | 46,4% | 28,4% | 0,8% | 1,1% |
| C₂H₆ | mol-% | 5,0% | 2,3% | 0,0% | 0,0% | 0,0% | 0,0% | 0,0% |
| C₃H₈ | mol-% | 4,0% | 1,8% | 0,0% | 0,0% | 0,0% | 0,0% | 0,0% |
| C₄H₁₀ | mol-% | 3,0% | 1,4 | 0,0% | 0,0% | 0,0% | 0,0% | 0,0% |

Es ergibt sich, dass der ursprünglich >12 Vol.-% betragende Anteil höherer Kohlenwasserstoffe im Einsatzgas (lediglich die C₂ - C₄-Komponenten sind angegeben) nach dem Vorreformer (M3 ff) auf nahe Null reduziert wurde. Bei dem dargestellten Beispiel wird eine 50 : 50-Aufteilung der Teilströme durch den Dampfreformer 4 bzw. über die Bypassleitung 5 vorgenommen. Dies erfordert eine relativ hohe Dampfzuspeisung vor dem Dampfreformer 4. Die Eingangstemperatur des autothermen Reformers 7 (M5) ist >700°C. Es ergibt sich ein H₂/CO-Verhältnis von etwa 3 : 1 am Ausgang der Anlage (M7).

### Bezugszeichenliste

- 1: Entschwefelungsanlage
- 2: Vorreformer
- 3: Abzweigstelle
- 4: Dampfreformer
- 5: Bypassleitung
- 6: Wärmetauscher
- 7: autothermer Reformer
- 8: Abhitzekessel
- 9: Leitungsabschnitt

## Patentansprüche

1. Verfahren zur Herstellung von Synthesegas aus einem Kohlenwasserstoffe enthaltenden Ausgangsmaterial, insbesondere Erdgas,
wobei ein Zufuhrstrom des Ausgangsmaterials in einen ersten Teilstrom und einen zweiten Teilstrom aufgeteilt wird,
wobei der erste Teilstrom einem Dampfreformer zugeführt wird, in dem er zusammen mit Wasserdampf katalytisch zu einem Wasserstoff und Kohlenstoffoxide enthaltenden Gasstrom umgewandelt wird,
wobei der erste Teilstrom mit einer Temperatur von 650 bis 850 °C nach der Dampfreformierung wieder mit dem zweiten Teilstrom zusammengeführt wird, und
wobei der zusammengeführte Gasstrom mit einer Temperatur von 650 bis 850 °C einem autothermen Reformer zugeführt wird, in dem er zusammen mit sauerstoffreichem Gas autotherm zu einem Synthesegas reformiert wird, welches eine Austrittstemperatur von 900 bis 1050 °C aufweist, **dadurch gekennzeichnet, dass** das gesamte Ausgangsmaterial vor der Dampfreformierung und vor der autothermen Reformierung einer Vorreformierung unterworfen wird, in welchem das Ausgangsmaterial weitgehend von höheren Kohlenwasserstoffen befreit wird, und dass die Temperatur des zweiten, an dem Dampfreformer vorbeigeführten Teilstroms auf 600 bis 700 °C erhöht wird, bevor der zweite Teilstrom wieder mit dem Ausgangsstrom des Dampfreformers zusammengeführt wird.

2. Verfahren nach Anspruch 1, **dadurch gekennzeichnet, dass** das Ausgangsmaterial vor der Aufteilung in den ersten und zweiten Teilstrom der Vorreformierung unterworfen wird.

3. Verfahren nach Anspruch 1, **dadurch gekennzeichnet, dass** der erste und der zweite Teilstrom des Ausgangsmaterials getrennt einer Vorreformierung unterworfen werden.

4. Verfahren nach einem der vorhergehenden Ansprüche, **dadurch gekennzeichnet, dass** das Ausgangsmaterial in dem Vorreformer einer Dampfreformierungsreaktion unterworfen wird.

5. Verfahren nach einem der vorhergehenden Ansprüche, **dadurch gekennzeichnet, dass** das Ausgangsmaterial dem Vorreformer mit einer Temperatur von 400 bis 500 °C, vorzugsweise 450 bis 500 °C, zugeführt wird.

6. Verfahren nach einem der vorhergehenden Ansprüche, **dadurch gekennzeichnet, dass** in dem zweiten Teilstrom 20 bis 80 %, vorzugsweise 20 bis 30 %, des Ausgangsmaterials abgezweigt und an der Dampfreformierung vorbeigeführt werden.

7. Verfahren nach einem der vorhergehenden Ansprüche, **dadurch gekennzeichnet, dass** der Gasstrom dem autothermen Reformer mit einer Temperatur von 700 bis 800 °C, zugeführt wird.

8. Verfahren nach einem der vorhergehenden Ansprüche, **dadurch gekennzeichnet, dass** das Ausgangsmaterial einen Anteil an Kohlenwasserstoffen mit zwei oder mehr Kohlenwasserstoffatomen von mehr als 10 Vol.-%, insbesondere mehr als 12 Vol.-%, aufweist

9. Anlage zur Herstellung eines Synthesegases aus einem Kohlenwasserstoffe enthaltenden Ausgangsmaterial mit einem Dampfreformer (4), in dem das Ausgangsmaterial mit Wasserdampf katalytisch zu einem Wasserstoff und Kohlenstoffoxide enthaltenden Gasstrom umgewandelt wird, mit einem autothermen Reformer (7), in dem das Ausgangsgas des Dampfreformers (4) zusammen mit sauerstoffreichem Gas autotherm zu einem Synthesegas reformiert wird, und mit einer Bypassleitung (5), über welche ein Teilstrom des Ausgangsmaterials vor der Dampfreformierung aus einer Hauptzufuhrleitung abgezweigt und unter Umgehung des Dampfreformers (4) dem autothermen Reformer (7) zugeführt wird, **dadurch gekennzeichnet, dass** vor dem Dampfreformer (4) und vor dem autothermen Reformer (7) ein Vorreformer (2) vorgesehen ist, durch welchen das gesamte Ausgangsmaterial hindurchgeführt wird, um den Gehalt an höheren Kohlenwasserstoffen in dem Ausgangsmaterial zu verringern oder diese Kohlenwasserstoffe ganz aus dem Ausgangsmaterial zu entfernen, und dass in der Bypassleitung (5) ein Wärmetauscher (6) vorgesehen ist.

10. Anlage nach Anspruch 9, **dadurch gekennzeichnet, dass** der Vorreformer (2) vor dem Abzweig (3) der Bypassleitung (5) vorgesehen ist.

11. Anlage nach Anspruch 9, **dadurch gekennzeichnet, dass** ein erster Vorreformer (2₁) in dem nach dem Abzweig (3) der Bypassleitung (5) zum Dampfreformer (4) führenden Leitungsabschnitt (9) vorgesehen ist und dass ein zweiter Vorreformer (2₂) in der Bypassleitung (5) vorgesehen ist.

## Claims

1. A process for producing synthesis gas from a starting material containing hydrocarbons, in particular natural gas,
wherein a feed stream of the starting material is divided into a first partial stream and a second partial stream,
wherein the first partial stream is supplied to a steam reformer, in which together with steam it is catalytically converted to a gas stream containing hydrogen and carbon oxides,
wherein upon steam reforming the first partial stream with a temperature between 650 and 850 °C is again combined with the second partial stream, and
wherein the combined gas stream with a temperature between 650 and 850 °C is supplied to an autothermal reformer, in which it is autothermally reformed to a synthesis gas together with gas rich in oxygen featuring an exit temperature between 900 and 1050 °C,
**characterized in that** before steam reforming and before autothermal reforming the starting material is supplied to a pre-reformer, in which the starting material largely is liberated from higher hydrocarbons, and that the temperature of the second partial stream guided past the steam reformer is increased to 600 to 700 °C before it is again combined with the outlet stream of the steam reformer.

2. The process according to claim 1, **characterized in that** before division into the first and second partial streams, the starting material is subjected to prereforming.

3. The process according to claim 1, **characterized in that** the first and second partial streams of the starting material are separately subjected to prereforming.

4. The process according to any of the preceding claims, **characterized in that** the starting material is subjected to a steam reforming reaction in the pre-reformer.

5. The process according to any of the preceding claims, **characterized in that** the starting material is supplied to the pre-reformer with a temperature of 400 to 500 °C, preferably 450 to 500 °C.

6. The process according to any of the preceding claims, **characterized in that** in the second partial stream 20 to 80%, preferably 20 to 30% of the starting material are branched off and guided past the steam reformer.

7. The process according to any of the preceding claims, **characterized in that** the gas stream is supplied to the autothermal reformer with a temperature of 700 to 800 °C.

8. The process according to any of the preceding claims, **characterized in that** the starting material has a content of hydrocarbons with two or more hydrocarbon atoms of more than 10 vol-%, in particular more than 12 vol-%.

9. A plant for producing a synthesis gas from a starting material containing hydrocarbons, with a steam reformer (4) in which the starting material is catalytically converted to a gas stream containing hydrogen and carbon oxides, with an autothermal reformer (7) in which the starting gas of the steam reformer (4) together with gas rich in oxygen is autothermally reformed to a synthesis gas, and with a bypass conduit (5) via which a partial stream of the starting material is branched off from a main supply conduit before the steam reformer and is supplied to the autothermal reformer (7) by bypassing the steam reformer (4), **characterized in that** before the steam reformer (4) and before the autothermal reformer (7) a pre-reformer (2) is provided, through which the whole starting material is passed, in order to reduce the content of higher hydrocarbons in the starting material or completely remove these hydrocarbons from the starting material and that in the bypass conduit (5) a heat exchanger (6) is provided.

10. The plant according to claim 9, **characterized in that** the pre-reformer (2) is provided before the branching point (3) of the bypass conduit (5).

11. The plant according to claim 9, **characterized in that** a first pre-reformer (2₁) is provided in the conduit portion (9) leading to the steam reformer (4) after the branching point (3) of the bypass conduit (5) and that a second pre-reformer (2₂) is provided in the bypass conduit (5).

## Revendications

1. Procédé de fabrication de gaz de synthèse à partir d'une matière de départ contenant des hydrocarbures, notamment de gaz naturel, lors duquel un flux d'alimentation de la matière de départ est divisé en un premier flux partiel et en un deuxième flux partiel,
lors duquel le premier flux partiel est alimenté vers un reformeur à vapeur, en ce qu'ensemble avec de la vapeur d'eau, il est transformé par catalyse en un flux gazeux contenant de l'hydrogène et des oxydes de carbone,
lors duquel on réunit de nouveau le premier flux partiel à une température de 650 à 850 °C après le reformage à la vapeur avec le deuxième flux partiel et lors duquel on alimente le flux gazeux réuni à une température de 650 à 850 °C vers un reformeur auto-thermique, en le reformant de manière auto-thermique, ensemble avec un gaz riche en oxygène en un gaz de synthèse, lequel présente une température de sortie de 900 à 1050 °C,
**caractérisé en ce qu'**avant le reformage à la vapeur et avant le reformage auto-thermique, on soumet l'ensemble de la matière de départ à un pré-reformage, lors duquel la matière de départ est largement libérée d'hydrocarbures supérieurs et **en ce qu'**on augmente la température du deuxième flux partiel que l'on fait passer devant le reformeur à vapeur à de 600 à 700 °C, avant de réunir de nouveau le deuxième flux partiel avec le flux de sortie du reformeur à vapeur.

2. Procédé selon la revendication 1, **caractérisé en ce qu'**avant la division dans le premier et dans le deuxième flux partiels, on soumet la matière de départ au pré-reformage.

3. Procédé selon la revendication 1, **caractérisé en ce qu'**on soumet le premier et le deuxième flux partiels de la matière de départ séparément à un pré-reformage.

4. Procédé selon l'une quelconque des revendications précédentes, **caractérisé en ce que** dans le pré-reformeur, on soumet la matière de départ à une réaction de reformation à la vapeur.

5. Procédé selon l'une quelconque des revendications précédentes, **caractérisé en ce qu'**on alimente la matière de départ vers le pré-reformeur à une température de 400 à 500 °C, de préférence, de 450 à 500 °C.

6. Procédé selon l'une quelconque des revendications précédentes, **caractérisé en ce que** dans le deuxième flux partiel, on fait dériver de 20 à 80 %, de préférence de 20 à 30 % de la matière de départ et on les fait passer devant le reformage à la vapeur.

7. Procédé selon l'une quelconque des revendications précédentes, **caractérisé en ce qu'**on alimente le flux gazeux dans le reformeur auto-thermique à une température de 700 à 800 °C.

8. Procédé selon l'une quelconque des revendications précédentes, **caractérisé en ce que** la matière de départ comporte une partie supérieure à 10 % en volume, notamment supérieure à 12% en volume d'hydrocarbures avec deux ou plusieurs atomes d'hydrocarbure.

9. Installation destinée à préparer un gaz de synthèse à partir d'une matière de départ contenant des hydrocarbures, avec un reformeur à vapeur (4), dans lequel la matière de départ est transformée par catalyse avec de la vapeur d'eau en un flux gazeux contenant de l'hydrogène et des oxydes de carbone, avec un reformeur auto-thermique (7) dans lequel le gaz de sortie du reformeur à vapeur (4) est reformé, ensemble avec un gaz riche en oxygène en un gaz de synthèse et avec un conduit de dérivation (5) par l'intermédiaire duquel un flux partiel de la matière de départ est dévié avant le reformage à la vapeur d'un conduit d'alimentation principal et en contournant le reformeur à vapeur (4), est alimenté dans le reformeur auto-thermique (7), **caractérisé en ce qu'**à l'avant du reformeur à vapeur (4) et à l'avant du reformeur auto-thermique (7), il est prévu un pré-reformeur (2) à travers lequel est guidée la matière de départ pour réduire la tenue d'hydrocarbures supérieurs dans la matière de départ ou pour retirer totalement lesdits hydrocarbures de la matière de départ et **en ce que** dans le conduit de dérivation (5), il est prévu un échangeur thermique (6).

10. Installation selon la revendication 9, **caractérisée en ce que** le pré-reformeur (2) est prévu à l'avant de la déviation (3) du conduit de dérivation (5).

11. Installation selon la revendication 9, **caractérisé en ce qu'**un premier pré-reformeur (2₁) est prévu dans le tronçon de conduit (9) prévu après la déviation (3) du conduit de dérivation (5) vers le reformeur à vapeur (4) et **en ce qu'**un deuxième pré-reformeur (2₂) est prévu dans le conduit de dérivation (5).
